Europäisches Patentamt

European Patent Office

Office européen des brevets

(11) Numéro de publication: **0 318 380 B1**

## FASCICULE DE BREVET EUROPEEN

(45) Date de publication de fascicule du brevet: **02.09.92**   (51) Int. Cl.5: **F16K 3/34**, F23N 1/00

(21) Numéro de dépôt: **88402950.5**

(22) Date de dépôt: **24.11.88**

(54) **Mécanisme d'alimentation modulable du gaz au brûleur d'un appareil du genre chaudière à gaz.**

(30) Priorité: **27.11.87 FR 8716453**

(43) Date de publication de la demande:
**31.05.89 Bulletin 89/22**

(45) Mention de la délivrance du brevet:
**02.09.92 Bulletin 92/36**

(84) Etats contractants désignés:
**BE DE ES GB IT**

(56) Documents cités:
EP-A- 0 245 068   DE-A- 3 047 136
FR-A- 1 180 167   FR-A- 2 249 275
US-A- 1 379 904   US-A- 3 014 489
US-A- 4 643 215

(73) Titulaire: **SAUNIER DUVAL EAU CHAUDE
CHAUFFAGE S.D.E.C.C. - Société anonyme
Les Miroirs 18 avenue d'Alsace
F-92096 Paris la Defense Cédex 27(FR)**

(72) Inventeur: **Vallat, Didier
33 rue de Castor
F-44700 Orvault(FR)**

(74) Mandataire: **Lhuillier, René et al
ARMENGAUD JEUNE CABINET LEPEUDRY 52,
avenue Daumesnil
F-75012 Paris(FR)**

## Description

L'invention qui se rapporte aux appareils du genre chaudière à gaz concerne plus précisément un mécanisme qui permet une alimentation modulable du gaz au brûleur de l'appareil à l'aide d'un plateau rotatif muni d'une pluralité d'injecteurs calibrés.

L'alimentation en gaz du brûleur d'une chaudière se fait de façon habituelle à l'aide d'une électrovalve dont le clapet obturateur est associé à un noyau ou à une palette magnétique mobile. L'ouverture ou la fermeture du clapet est assurée par l'attraction du noyau mobile ou de la palette qui vient brusquement au collage contre un noyau fixe dès qu'un courant est fourni à la bobine de l'électrovalve. A ce type d'électrovalve simplifiée fonctionnant en "tout ou rien", s'est substitué de plus en plus souvent maintenant l'électrovalve à ouverture progressive qui permet d'obtenir, à partir d'un premier seuil d'ouverture correspondant à un débit déterminé, une augmentation progressive de l'admission du gaz, directement asservie à l'intensité du courant d'excitation de la bobine de l'électrovalve. On connaît ainsi une électrovalve telle que décrite dans le FR-A 2 249 275 au nom de la Demanderesse, selon laquelle l'ensemble obturateur est constitué de deux clapets concentriques, un clapet petit débit étant directement solidaire du noyau mobile de la bobine. Le noyau comporte un prolongement cylindrique qui s'engage dans un orifice central d'un clapet grand débit dont le profil d'ouverture est progressif et qui porte un système de butée et de plateau d'entraînement grâce auquel il peut, à partir d'un seuil d'intensité, appliqué à la bobine, ouvrir ce clapet grand débit pour que l'orifice de passage du gaz soit progressif et asservi aux variations d'intensité.

Cette électrovalve ou des électrovalves de type voisin, sont exploités de façon habituelle, et fonctionnent correctement, mais présentent cependant un certain nombre d'inconvénients. D'abord en ce qui concerne leur fabrication et leur réglage. Il n'est en effet pas très facile de monter dans un boîtier deux clapets coaxiaux et leurs ressorts de rappel, de telle façon qu'ils se déplacent l'un par rapport à l'autre de façon rigoureuse, en assurant une bonne étanchéité à la fermeture et une ouverture progressive bien asservie aux intensités appliquées à la bobine de l'électrovalve, avec une force de rappel du ressort qui est difficilement parfaitement identique d'un appareil à l'autre. De plus si l'on veut modifier la puissance minimum de l'appareil ou régler le débit minimum du gaz suivant le type de gaz utilisé, il faut remplacer au moins certaines parties de l'électrovalve et procéder à des opérations de démontage et remontage assez longues.

Ces électrovalves connues présentent aussi un inconvénient inhérent à leur conception, lié à des problèmes d'hystérésis. En effet selon que la bobine de l'électrovalve est excitée par des intensités croissantes ou décroissantes de courant électrique, du fait de l'hystérésis, l'ouverture du clapet profilé, à intensité égale, n'est pas identiqué selon que l'on est en phase de montée de courant, ou en phase de descente de courant. Il en résulte une variation de débit de gaz admis au brûleur. Mais comme l'air comburant nécessaire à la combustion de ce gaz est asservi à l'intensité électrique appliquée à l'électrovalve, le débit d'air sera dans un des cas automatiquement trop important, ou inversement pas assez important par rapport au débit de gaz, d'où instabilité de la flamme au détriment d'un fonctionnement rigoureux.

Indépendamment de l'hystérésis, la précision du débit de gaz d'admission est directement liée à la précision de l'ouverture progressive du clapet profilé, et elle est donc très sensible aux variations dimensionnelles du clapet, et à son réglage.

On connaît aussi par le EP-A-0 245 068 comme défini dans le préambule de la revendication 1 un dispositif de régulation d'admission de gaz à un brûleur mettant en oeuvre un organe tubulaire rotatif percé d'une pluralité d'orifices, qui est entraîné en rotation d'une position ou il obture une ouverture de sortie de gaz à une autre position où l'ouverture est plus ou moins dégagée.

D'après le DE-A-3 047 136 est connue une vanne à passage direct dont un plateau rotatif percé d'orifices calibrés libère un débit de gaz approprié aux brûleurs pour une intensité déterminée.

Pour apporter une solution plus efficace au problème posé par les changements de gaz ou les modifications de puissance, la Demanderesse a imaginé un mécanisme plus simple différent des électrovalves précitées, qui ne met plus en oeuvre des pièces électromagnétiques sujettes à hystérésis, ni des clapets multiples ou profilés, rappelés par des ressorts et qui doivent dégager plus ou moins une ouverture de passage de gaz en fonction d'une intensité, ledit mécanisme allant dans le sens d'une diminution du prix de revient, d'une simplification du montage, et d'un fonctionnement rigoureux et fiable grâce auquel est obtenue une alimentation modulable du gaz admis aux brûleurs.

Aussi l'invention a-t-elle pour objet un mécanisme d'alimentation modulable du gaz au brûleur d'un appareil du genre d'une chaudière à gaz réagissant à une intensité de courant électrique fournie par un dispositif de commande et de régulation en vue d'asservir le débit de gaz admis au brûleur à ce courant en fonction de la demande de calories, mécanisme selon lequel un plateau rotatif est disposé à l'intérieur d'une chambre fermée d'un boîtier de distribution disposant d'une ouverture d'entrée de gaz à pression normale, chambre de laquelle le gaz peut sortir par une ouverture en direction des brûleurs et selon lequel ledit plateau porte une pluralité d'orifices calibrés le traversant sur toute son épaisseur et répartis sur au moins une couronne du plateau, au droit de l'ouverture, au moins une partie du plateau au droit de ladite ouverture étant muni d'un clapet monté sur ledit plateau, sur une petite tige support perpendiculaire à son plan et rappelé par un ressort de rappel pour assurer l'obturation de ladite ouverture, mécanisme selon lequel également ledit plateau est monté dans la chambre pour être appliqué contre l'ouverture et est entraîné en rotation de façon motorisée d'une position ou il obture l'ouverture, à au moins une position correspondant à une intensité déterminée dans laquelle un orifice calibré se trouve vis-à-vis de l'ouverture et libère un débit de gaz approprié aux brûleurs.

D'autres caractéristiques particulières et avantages de l'invention ressortiront de la description qui va suivre d'une forme particulière et non limitative de réalisation faisant référence aux dessins annexés qui représentent :

figure 1 une vue en coupe verticale du mécanisme,

figure 2 une vue en plan du plateau rotatif selon la figure 1.

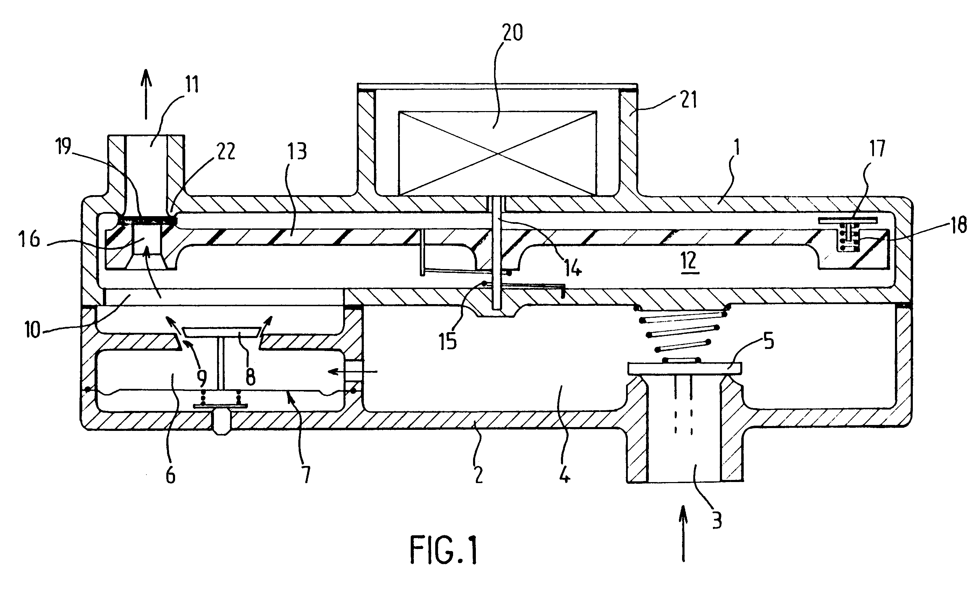

Le mécanisme représenté à la figure 1 comporte essentiellement un premier boîtier 2 d'admission de gaz qui est associé à un second boîtier de distribution de gaz vers les brûleurs, le second boîtier étant désigné dans son ensemble par la référence 1. Le boîtier 1 qui se présente comme une galette de forme circulaire dispose, à sa partie inférieure d'une ouverture d'entrée de gaz 10 et à proximité de sa bordure périphérique, sur sa partie supérieure, d'une ouverture de départ de gaz 11 en direction des brûleurs non représentés. Le pourtour de l'ouverture de départ 11, sur la face interne du boîtier 1 est en relief par rapport audit boîtier en vue de former une tige 22 pour un organe d'étanchéité, comme on le verra plus loin.

Le boîtier d'admission 2 a la forme d'une coquille qui s'applique de façon étanche contre la face inférieure du boîtier 1. Un orifice d'arrivée de gaz 3 autorise l'entrée de gaz dans une chambre d'admission 4 lors de l'ouverture d'un clapet d'arrêt 5. La chambre 4 communique avec la chambre de pression 6 d'un régulateur de débit de gaz dont la membrane 7 à rappel réglable agit sur un clapet de régulation 8 qui ouvre plus ou moins un orifice de passage 9. Ce dernier se superpose à l'ouverture d'entrée 10 du boîtier de distribution.

Ledit boîtier de distribution 1, quand le clapet 5 est ouvert voit sa chambre intérieure 12 remplie de gaz à la pression d'admission. A l'intérieur de cette chambre circulaire est monté un plateau rotatif 13 dont l'axe de rotation 14 s'étend verticalement entre les deux faces opposées formant le fond et le couvercle du boîtier 1, sur lesquelles il prend appui au centre du boîtier. Le plateau est monté sur l'axe 14 de telle sorte que sa face supérieure soit en appui sur le siège 22. Un ressort spirale 15 est intercalé sur l'axe entre le fond du boîtier et la face inférieure du plateau 13 ; une de ses extrémités est ancrée au boîtier, l'autre est ancrée au plateau lui-même. L'axe 14 traverse de façon étanche le couvercle du boîtier 1 et se raccorde à un moteur pas à pas 20 monté de façon fixe dans une alvéole 21 à l'extérieur du boîtier.

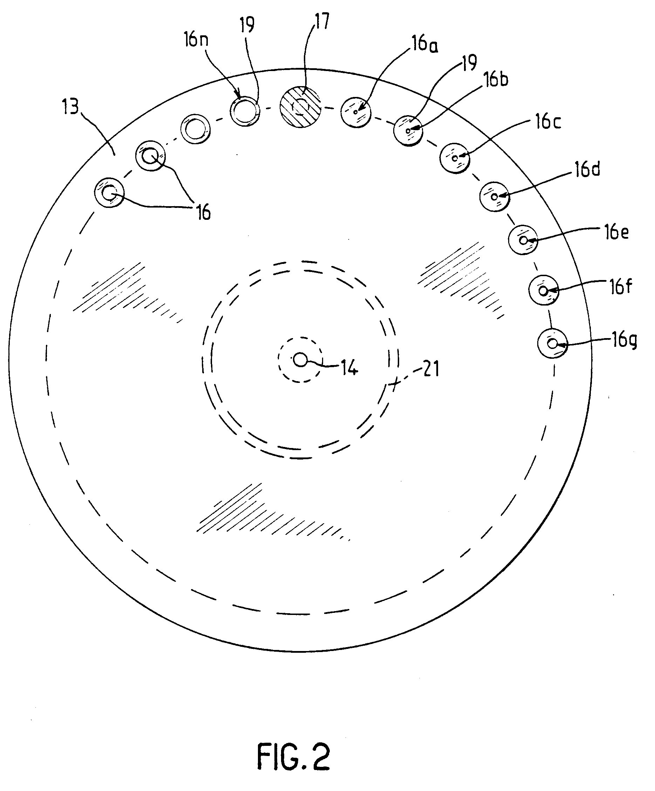

Le plateau 13, également représenté à la figure 2 présente sur toute sa périphérie une succession d'orifices 16 (16a, 16b, 16c... 16g) qui sont calibrés différemment et progressivement d'un orifice à l'orifice voisin entre un orifice 16a de diamètre minimum et un orifice $16_n$ de diamètre maximum. Autour de chaque orifice 16, sur la face supérieure du plateau 13, est prévue une couronne annulaire 19 servant de pièce de frottement contre le siège 22 et assurant ainsi l'étanchéité de la chambre 12 entre l'ouverture de sortie 11 et l'orifice 16 porté par le plateau 13. En un endroit du plateau 13, il n'y a pas d'orifice mais un petit clapet obturateur 17 au dessus du plateau, monté coulissant sur une petite tige support perpendiculaire au plan du plateau, un petit ressort de rappel 18 étant intercalé entre ledit clapet 17 et le plateau. On remarquera que le clapet 17 est localisé entre l'orifice 16a de plus petit diamètre, et l'orifice $16_n$ de plus grand diamètre, lesdits orifices encadrant le clapet. Selon une variante, le clapet 17 pourrait être constitué par une simple plage fixe du plateau, avec éventuellement une surépaisseur ou une pièce d'étanchéité rapportée.

Les orifices 16 sont obtenus directement par perçages dans le plateau ou encore ils sont constitués d'une série d'injecteurs à orifices variables montés de façon étanche dans des ouvertures identiques du plateau. Ces injecteurs gaz sont par exemple ceux déjà utilisés dans les appareils classiques, ce qui introduit ainsi une simplification dans la réalisation du dispositif.

Quand il n'y a pas de demande de calories à l'appareil, mais que celui-ci est prêt à fonctionner, le clapet 5 est ouvert et le gaz est admis à sa pression d'alimentation, dans la chambre 12. Le plateau 13 occupe alors une position pour laquelle le clapet obturateur 17 se trouve vis à vis de l'ouverture 11 et appliqué contre le siège 22 sous l'action de son petit ressort de rappel 18, et le gaz ne peut sortir en direction des brûleurs.

Dès qu'une intensité de courant électrique est fournie au moteur 20 sous la commande du dispositif de régulation, intensité minimum correspondant à la puissance minimum recherchée, ledit moteur va tourner d'un pas et faire tourner le plateau 13 de façon correspondante pour amener le premier orifice 16a de plus petit diamètre, immédiatement voisin, au droit de l'ouverture 11, à la place du clapet 17. Le gaz est alors admis à très petit débit aux brûleurs à partir de l'ouverture 11. Si l'intensité augmente, le moteur 20 tournera d'un nombre de pas correspondant à l'intensité qui lui est appliquée et viendra alors positionner l'orifice 16 approprié devant l'ouverture 11, pour fournir un débit de gaz plus important aux brûleurs. La pluralité d'orifice 16 permet donc d'obtenir des puissances variables et progressives de l'appareil en fonction de l'intensité appliquée.

Selon une variante non représentée, et pour éviter de multiplier ces orifices on peut envisager de donner, grâce au moteur 20, une oscillation permanente rapide du plateau 13 pour que deux orifices 16 voisins se placent à tour de rôle devant l'ouverture 11. On obtiendra ainsi un débit moyen stabilisé de gaz par l'ouverture, en fonction de la fréquence d'oscillation.

Après fonctionnement, quand le moteur 20 n'est plus sollicité, il y a remise à zéro du mécanisme par retour du plateau 13 dans sa position originale sous l'action du ressort spirale 15, position pour laquelle le clapet 17 obture l'ouverture 11.

Le mécanisme ainsi décrit est simple à réaliser. Le plateau 13 peut être moulé ou en tôle emboutie. Les étanchéités au niveau de l'ouverture 11, grâce à la couronne 19 sont aisées à réaliser. Une fois le plateau monté, aucun réglage n'est plus à faire.

D'autre part quand un changement de gaz est nécessaire il suffit de remplacer le plateau 13 par celui correspondant au gaz approprié. On notera que le mécanisme, ainsi décrit à titre d'exemple, et qui peut présenter des variantes constructives, est compact et donc facilement intégrable dans les appareils.

**Revendications**

1. Mécanisme d'alimentation modulable du gaz au brûleur d'un appareil du genre d'une chaudière à gaz réagissant à une intensité de courant électrique fournie par un dispositif de commande et de régulation en vue d'asservir le débit de gaz admis au brûleur à ce courant en fonction de la demande de calories, caractérisé en ce qu'un plateau rotatif (13) est disposé à l'intérieur d'une chambre fermée (12) d'un boîtier de distribution (1) disposant d'une ouverture d'entrée de gaz (10) à pression normale, chambre de laquelle le gaz peut sortir par une ouverture (11) en direction des brûleurs, en ce que ledit plateau porte une pluralité d'orifices calibrés (16) le traversant sur toute son épaisseur et répartis sur au moins une couronne du plateau, au droit de l'ouverture (11), au moins une partie du plateau, au droit de ladite ouverture étant muni d'un clapet (17) monté sur ledit plateau, sur une petite tige support perpendiculaire à son plan et rappelé par un ressort de rappel (18), pour assurer l'obturation de ladite ouverture, en ce que ledit plateau est monté dans la chambre (12) pour être appliqué contre l'ouverture (11) et en ce qu'il est entraîné en rotation de façon motorisée d'une position où il obture l'ouverture, à au moins une position correspondant à une intensité déterminée dans laquelle un orifice calibré (16a, 16b....) se trouve vis-à-vis de l'ouverture et libère un débit de gaz approprié aux brûleurs.

2. Mécanisme selon la revendication 1, caractérisé en ce qu'un boîtier d'admission gaz (2) est appliqué contre le boîtier de distribution (1) pour faire communiquer une chambre d'admission (4) avec l'ouverture d'entrée de gaz (10).

3. Mécanisme selon la revendication 1, caractérisé en ce qu'un ressort spirale (15) est intercalé sur un axe (14) de rotation du plateau (13) entre le fond du boîtier (1) et la face inférieure dudit plateau.

4. Mécanisme selon la revendication 1 caractérisé en ce que autour de chaque orifice (16) sur la face supérieure du plateau (13) est prévue une couronne annulaire (19) servant de pièce de frottement et d'étanchéité.

5. Mécanisme selon la revendication 1, caractérisé en ce que le clapet (17) est localisé entre un orifice (16a) de plus petit diamère et un orifice (16n) de plus grand diamètre, du plateau rotatif (13).

6. Mécanisme selon les revendications 1 et 3, caractérisé en ce que l'entraînement en rotation du plateau (13) est assuré par un moteur pas à pas (20), monté à l'extérieur du boîtier (1) et agissant sur son axe (14).

7. Mécanisme selon les revendications 1 et 6, caractérisé en ce que le moteur (20) donne au plateau (13) une oscillation permanente et rapide entre deux orifices (16) voisins pour fournir un débit moyen de gaz par l'ouverture (11).

**Claims**

1. Mechanism for variable feeding of the gas of an apparatus of the gas-fired boiler type reacting to an electrical current intensity supplied by a control and regulation device with a view to slaving the gas flow admitted to the burner to this current as a function of the heat demand, characterised in that a rotary plate (13) is disposed inside a closed chamber (12) of a distribution housing (1) using a gas-inlet opening (10) at normal pressure, from which chamber the gas may leave via an opening (11) in the direction of the burners, in that the said plate carries a plurality of calibrated orifices (16) traversing it right through its thickness and which are distributed over at least one ring of the plate, in line with the opening (11), at least one portion of the plate, in line with the said opening, being provided with a valve (17) mounted on the said plate, on a small support rod perpendicular to its plane and returned by a return spring (18), in order to close off the said opening, in that the said plate is mounted in the chamber (12) in order to be applied against the opening (11) and in that it is rotationally driven in a motorised manner from one position where it closes off the opening to at least one position corresponding to a specified intensity in which a calibrated orifice (16a, 16b... etc.) is opposite the opening and releases an appropriate gas flow to the burners.

2. Mechanism according to Claim 1, characterised in that a gas-intake housing (2) is applied against the distribution housing (1) in order to make an intake chamber (4) communicate with the gas-inlet opening (10).

3. Mechanism according to Claim 1, characterised in that a spiral spring (15) is inserted onto a shaft (14) for rotating the plate (13) between the bottom of the housing (1) and the lower face of the said plate.

4. Mechanism according to Claim 1, characterised in that an annular ring (19) acting as a friction and sealing member is provided around each orifice (16) on the upper face of the plate (13).

5. Mechanism according to Claim 1, characterised in that the valve (17) is positioned between a smaller-diameter orifice (16a) and a larger-diameter orifice (16n) of the rotary plate (13).

6. Mechanism according to Claims 1 and 3, characterised in that the rotational driving of the plate (13) is ensured by a stepping motor (20) mounted outside the housing (1) and acting on its shaft (14).

7. Mechanism according to Claims 1 and 6, characterised in that the motor (20) imparts to the plate (13) a continuous and rapid oscillation between two adjacent orifices (16) in order to supply an average gas flow through the opening (11).

**Patentansprüche**

1. Modulierbare Gasversorgungseinrichtung für Brenner einer Vorrichtung in Bauart eines Gasheizkessels, die auf die Stärke eines von einer Steuer- und Regelvorrichtung gelieferten elektrischen Stroms reagiert, um den dem Brenner zugeführten Gasfluß von diesem Strom abhängig zu machen in Funktion des Kalorienbedarfs, dadurch gekennzeichnet, daß eine drehbare Platte (13) im Innenraum einer abgeschlossenen Kammer (12) eines Verteilergehäuses (1) angeordnet ist, das eine Öffnung für den Gaseintritt (10) bei Normaldruck aufweist, wobei das Gas aus der Kammer durch eine Öffnung (11) in Richtung zu den Brennern austreten kann, daß diese Platte eine Vielzahl von kalibrierten Löchern (16) aufweist, die sie auf ihrer gesamten Dicke durchsetzen, die verteilt sind auf mindestens einem Ringbereich dieser Platte und der Öffnung (11) gegenüber liegen, wobei zumindest ein Teilbereich dieser Platte, der der genannten Öffnung (11) gegenüberliegt, mit einem Ventil (17), das auf der genannten Platte auf einem kleinen Stützstempel, der senkrecht zur Ventilebene verläuft, montiert und rückgestellt ist durch eine Rückstellfeder (18), um den Abschluß der genannten Öffnung sicherzustellen, daß die genannte Platte derart in der Kammer (12) angeordnet ist, daß eine Anlage gegen die Öffnung (11) möglich ist und daß die Platte motorgetrieben drehbar ist zwischen einer Position, in der sie die Öffnung verschließt und mindestens einer Position, die einer vorgegebenen Stromstärke entspricht, in der ein kalibriertes Loch (16a, 16b ...) sich der Öffnung gegenüberliegend befindet und einen passenden Gasfluß zu den Brennern ermöglicht.

2. Vorrichtung nach Anspruch 1, dadurch gekennzeichnet, daß ein Gaszuführgehäuse (2) am Verteilergehäuse (1) angesetzt ist, so daß eine Einspeisungskammer (4) mit der Öffnung für den Gaseintritt (10) kommunizieren kann.

3. Vorrichtung nach Anspruch 1, dadurch gekennzeichnet, daß eine Schraubenfeder (12) auf einer Rotationsachse (14) der Platte (13) zwischen dem Boden des Verteilerrgehäuses (1) und der unteren Fläche dieser Platte angeordnet ist.

4. Vorrichtung nach Anspruch 1, dadurch gekennzeichnet, daß um jedes Loch (16) auf der oberen Fläche der Platte (13) eine Ringscheibe (19) angeordnet ist, die als Reibungs- und Dichtteil wirkt.

5. Vorrichtung nach Anspruch 1, dadurch gekennzeichnet, daß das Ventil (17) zwischen einem Loch (16 a) mit dem kleinsten Durchmesser und einem Loch (16 n) mit dem größten Durchmesser der rotierenden Platte (13) angeordnet ist.

6. Vorrichtung nach den Ansprüchen 1 und 3, dadurch gekennzeichnet, daß der Rotationsantrieb der Platte (13) durch einen Schrittmotor (20) erfolgt, der außerhalb des Verteilergehäuses (1) angeordnet ist und auf seine Achse (14) wirkt.

7. Vorrichtung nach den Ansprüchen 1 und 6, dadurch gekennzeichnet, daß der Motor (20) der Platte (13) eine permanente und rasche Oszillation zwischen zwei benachbarten Löchern (16) verleiht, um einen mittleren Gasfluß durch die Öffnung (11) sicherzustellen.

FIG.1

FIG.2